# EUROPEAN PATENT APPLICATION

(11) **EP 4 832 077 A1**
(43) Date of publication of application: **28.10.2026**
(21) Application number: 24907816.3
(22) Date of filing: 21.11.2024
(51) Int. Cl.: H01M 4/36, C01G 53/00, H01M 4/525, H01M 4/505, H01M 10/052, H01M 4/02

(54) **CATHODE ACTIVE MATERIAL FOR ALL-SOLID-STATE BATTERY AND METHOD OF MANUFACTURING SAME**

(30) Priority: 18.12.2023 KR 20230184960
(71) Applicant: POSCO Holdings Inc., Pohang-si, Gyeongsangbuk-do 37859 (KR)
(72) Inventor: MOON, Ji Woong, Pohang-si, Gyeongsangbuk-do 37859 (KR); SONG, Jung Hoon, Pohang-si, Gyeongsangbuk-do 37859 (KR); LEE, Jae Myung, Pohang-si, Gyeongsangbuk-do 37859 (KR); PARK, Yooncheol, Pohang-si, Gyeongsangbuk-do 37859 (KR); NAM, Sang Cheol, Pohang-si, Gyeongsangbuk-do 37859 (KR)
(74) Representative: Pfenning, Meinig & Partner mbB
(86) International application number: PCT/KR2024/018438
(87) International publication number: WO 2025/135531

(57) **Abstract**

The present invention relates to a positive electrode active material for an all-solid-state battery and a method for manufacturing the same. Specifically, the present invention relates to a positive electrode active material for an all-solid-state battery, in which a lithium metal oxide is washed with a solution including CoSO₄ to precipitate cobalt on a surface thereof, and a method for manufacturing the same.

## Description

### [TECHNICAL FIELD]

The present invention relates to a positive electrode active material for an all-solid-state battery and a method for manufacturing the same. Specifically, the present invention relates to a positive electrode active material for an all-solid-state battery, in which a lithium metal oxide is washed with a solution including CoSO₄ to precipitate cobalt on a surface thereof, and a method for manufacturing the same.

### [BACKGROUND ART]

Unlike a general lithium ion battery using a liquid electrolyte, a positive electrode active material for an all-solid-state battery using a solid powder as an electrolyte may have electrochemical characteristics that vary depending on a surface contact surface between a positive electrode material and an electrolyte, surface reaction characteristics, and whether physical contact is maintained after expansion/contraction during charging and discharging.

In order to manufacture a positive electrode active material for an all-solid-state battery having excellent electrochemical characteristics, attempts have been made to reduce an average particle size of a positive electrode material, and in addition, various studies have been attempted, such as changing single-crystal/polycrystalline forms, controlling a calcination temperature, changing a surface coating material, and changing a surface coating method.

In particular, many studies have also been attempted in which a surface of a positive electrode active material is treated using a washing solution in order to reduce residual lithium impurities, which are one of the main causes of deterioration of the positive electrode active material. In general, when distilled water is introduced as a washing solution, the effect of reducing residual lithium is excellent, but there is a problem in that it is difficult to prevent damage caused by washing from occurring on the surface of the positive electrode active material. Typically, manganese is easily eluted during washing, thereby lowering structural stability of the positive electrode active material, and accordingly, there is a problem in that lifespan characteristics are rapidly reduced.

Accordingly, there is a need for a technology for a positive electrode active material and a method for manufacturing the same, capable of effectively reducing residual lithium impurities on the surface of the positive electrode active material while recovering washing damage, thereby improving lifespan characteristics.

### [DETAILED DESCRIPTION OF THE INVENTION]

### [Technical Problem]

A technical problem to be solved by the present invention is to provide a positive electrode active material for an all-solid-state battery, in which residual lithium is removed by washing a lithium metal oxide with an aqueous solution including CoSO₄, and at the same time cobalt is precipitated on a surface thereof, so that surface damage caused by washing is recovered.

Another technical problem to be solved by the present invention is to provide a method for manufacturing a positive electrode active material for an all-solid-state battery having the above-described advantages.

### [Technical Solution]

A positive electrode active material for an all-solid-state battery according to one embodiment of the present invention may include: a core including an NCM-based lithium transition metal oxide; and a coating layer containing a cobalt material and positioned on a surface of the core, wherein a content of Ni in the NCM-based lithium transition metal oxide is 80 mol% or more based on 100 mol% of the total amount of transition metals, and cobalt contained in the coating layer may include at least one selected from metal cobalt and cobalt compounds.

A method for manufacturing a positive electrode active material for an all-solid-state battery according to another embodiment of the present invention may include: forming a transition metal hydroxide by mixing a nickel salt, a cobalt salt, a manganese salt, and a complexing agent by a coprecipitation method; mixing the transition metal hydroxide and a lithium compound to form a lithium transition metal hydroxide; first heat-treating the lithium transition metal hydroxide to form a lithium transition metal oxide; washing the lithium transition metal oxide with a washing solution including CoSO₄; second heat-treating the washed lithium transition metal oxide; and coating the second heat-treated lithium transition metal oxide with a protective coating layer that suppresses an interfacial reaction with a solid electrolyte.

### [Advantageous Effects]

The positive electrode active material for an all-solid-state battery according to one embodiment of the present invention may remove residual lithium by washing a lithium metal oxide with a solution including CoSO₄, and at the same time precipitate cobalt on a surface thereof, thereby recovering damage to the surface of the positive electrode active material for an all-solid-state battery caused by washing.

The method for manufacturing a positive electrode active material for an all-solid-state battery according to another embodiment of the present invention may provide a positive electrode active material having the above-described advantages.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

Hereinafter, a positive electrode active material for an all-solid-state battery according to one embodiment of the present invention will be described.

The positive electrode active material for an all-solid-state battery according to one embodiment may include: a core including an NCM-based lithium transition metal oxide; and a coating layer containing a cobalt material and positioned on a surface of the core, wherein a content of Ni in the NCM-based lithium transition metal oxide is 80 mol% or more based on 100 mol% of the total amount of transition metals, and cobalt contained in the coating layer may include at least one selected from metal cobalt and cobalt compounds.

When the content of Ni is included in the above-described range, energy density and capacity of the positive electrode active material may be high.

In the coating layer of the positive electrode active material for an all-solid-state battery according to one embodiment, a content of the cobalt material may be in a range of 0.5 mol% to 2 mol% with respect to the total number of moles of transition metals constituting the core including the NCM-based lithium transition metal oxide.

When the content of the cobalt material is included in the above-described range, safety and lifespan characteristics may be improved. However, when the content of the cobalt material is less than the lower limit of the above-described range, damage to the surface of the positive electrode active material may not be sufficiently healed, and lifespan characteristics may be lowered. In addition, when the content of the cobalt material exceeds the upper limit of the above-described range, although there is an advantage that stability is improved by introducing a large amount of expensive Co into the positive electrode active material, there is a problem in that the price of the positive electrode active material rapidly increases, and thus it may not be suitable for commercialization.

In the positive electrode active material for an all-solid-state battery according to one embodiment, a weight ratio of the coating layer to the total weight of the core may be in a range of 1:100 to 20:100.

When the weight ratio of the coating layer is included in the above-described range, both capacity and lifespan characteristics of the positive electrode active material may be evenly improved. However, when the weight ratio of the coating layer is less than the lower limit of the above-described range, an amount of the coating layer capable of reacting with the surface of the positive electrode material is not sufficiently formed, so that washing damage on the surface of the positive electrode active material is not healed and remains exposed, and thus lithium ion deintercalation from the positive electrode active material may not proceed smoothly, thereby rapidly reducing charge capacity and discharge capacity.

In addition, when the weight ratio of the coating layer exceeds the upper limit of the above-described range, the coating layer excessively blocks the core, and thus insertion and deintercalation of lithium ions are not smooth, so that capacity may not be sufficiently expressed.

Hereinafter, a method for manufacturing a positive electrode active material for an all-solid-state battery according to another embodiment of the present invention will be described.

The method for manufacturing a positive electrode active material for an all-solid-state battery according to another embodiment may include: forming a transition metal hydroxide by mixing a nickel salt, a cobalt salt, a manganese salt, and a complexing agent by a coprecipitation method; mixing the transition metal hydroxide and a lithium compound to form a lithium transition metal hydroxide; first heat-treating the lithium transition metal hydroxide to form a lithium transition metal oxide; washing the lithium transition metal oxide with a washing solution including CoSO₄; second heat-treating the washed lithium transition metal oxide; and coating the second heat-treated lithium transition metal oxide with a protective coating layer that suppresses an interfacial reaction with a solid electrolyte.

In the washing step of the method for manufacturing a positive electrode active material for an all-solid-state battery according to another embodiment, a solvent included in the washing solution may include at least one selected from water, methanol, and ethanol. Preferably, the solvent may be water.

In the washing step of the method for manufacturing a positive electrode active material for an all-solid-state battery according to another embodiment, a content of CoSO₄ in the washing solution may be 1 to 30 wt% based on the total weight of the washing solution.

When the CoSO₄ content satisfies the above-described range, residual lithium impurities remaining on the surface of the lithium transition metal oxide can be effectively removed, and the effect of recovering damage caused by washing can also be maximized. However, when the CoSO₄ content is not included in the above-described range, residual lithium impurities may not be removed, or washing damage may not be completely recovered, and thus side reactions or deterioration may occur in the positive electrode active material, thereby rapidly reducing lifespan characteristics of a cell.

In addition, the coating layer using the CoSO₄ solution requires heat treatment, and a heat treatment temperature is in a range of 600°C to 700°C, and a heat treatment time is in a range of 5 hours to 10 hours. When the heat treatment temperature and time are less than the lower limits of the above ranges, sufficient recovery of washing damage is not achieved. When the heat treatment temperature and time exceed the upper limits, the Co component diffuses into the core particles, thereby reducing the fraction used to overcome washing damage generated on the surface of the positive electrode material. In addition, in the heat treatment process, it is effective to separately add a certain amount of LiOH at a level of 2500 to 3500 ppm with respect to the core positive electrode material particles. This is because a Li component insufficient in a region where washing damage has occurred is directly supplied, thereby restoring the layered structure of the positive electrode material from which lithium has been eluted in the washing step. When the amount is lower than the lower limit, lithium supply is limited, and thus the effect is limited. When the amount is added above the upper limit, residual lithium may increase again.

In the washing step of the method for manufacturing a positive electrode active material for an all-solid-state battery according to another embodiment, a weight ratio of the lithium transition metal oxide to the washing solution may be in a range of 100:100 to 80:100.

When the weight ratio of the lithium transition metal oxide is included in the above-described range, residual lithium impurities remaining on the surface of the lithium transition metal oxide can be effectively removed, and the effect of recovering damage caused by washing can also be maximized. However, when the weight ratio of the lithium transition metal oxide is not included in the above-described range, residual lithium impurities may not be removed, or washing damage may not be completely recovered, and thus side reactions or deterioration may occur in the positive electrode active material, thereby rapidly reducing lifespan characteristics of a cell.

In the washing step of the method for manufacturing a positive electrode active material for an all-solid-state battery according to another embodiment, the time for washing the lithium transition metal oxide may be 5 minutes or more and less than 11 minutes.

When the washing time is included in the above-described range, residual lithium impurities remaining on the surface of the lithium transition metal oxide can be effectively removed, and the effect of recovering damage caused by washing can also be maximized. However, when the washing time is not included in the above-described range, residual lithium impurities may not be removed, or washing damage may not be completely recovered, and thus side reactions or deterioration may occur in the positive electrode active material, thereby rapidly reducing lifespan characteristics of a cell.

The washing step of the method for manufacturing a positive electrode active material for an all-solid-state battery according to another embodiment may further include a stirring process, and the stirring speed may be 100 rpm to 300 rpm.

When the stirring process is included and the stirring speed satisfies the above-described range, process costs can be reduced because a washing time of the lithium transition metal oxide is shortened while the washing effect and damage recovery are maximized. On the other hand, when the stirring speed is less than the lower limit of the above-described range, it is difficult to effectively shorten the washing time. In addition, when the stirring speed exceeds the upper limit of the above-described range, process costs may increase because a large amount of energy is input compared to the effects of reducing residual lithium impurities and recovering damage.

### [MODE FOR CARRYING OUT THE INVENTION]

Hereinafter, Examples, Comparative Examples, and Experimental Examples of the present invention will be described. However, the following Examples are merely preferred embodiments of the present invention, and the present invention is not limited by the following Examples. In addition, various modifications can be made and practiced within the scope of the claims, the detailed description of the invention, and the accompanying drawings, and these may also fall within the scope of the present invention.

### <Example 1>

### (1) Primary Calcination Step

A transition metal hydroxide precursor Ni₀.₈₃Co₀.₁₂Mn₀.₀₅(OH)₂ having an average particle diameter of 4 µm and LiOH·H₂O as a lithium raw material were mixed at a molar ratio of 1:1.03 to form a mixture. 1 kg of the mixture was charged into a tube furnace, and the temperature was raised at a rate of 2.5°C/min. After maintaining a calcination temperature of 730°C and a retention time of 10 hours, the temperature was lowered at a cooling rate of 2.5°C/min. During calcination, pure O₂ was supplied so that an O₂ concentration of 99% or more could be maintained, thereby forming a first lithium transition metal oxide Ni₀.₈₃Co₀.₁₂Mn₀.₀₅O₂ having an average particle diameter (D50) of 4 to 5 µm.

### (2) CoSO₄ Washing Coating and Drying Step

600 g of the first lithium transition metal oxide Ni₀.₈₃Co₀.₁₂Mn₀.₀₅O₂ manufactured in the primary calcination was stirred with 600 g of distilled water for 6 minutes, and then a coating solution of 2 M CoSO₄·7H₂O was introduced.

After reacting for 4 minutes, dehydration was performed for 3 minutes using a filter press, and then vacuum drying was performed for 12 hours in a vacuum oven maintained at 140°C.

### (3) Heat Treatment Step

LiOH·H₂O in an amount of about 3000 ppm by weight ratio was mixed with the powder for which vacuum drying had been completed, and then heat treatment was performed at 650°C for 5 hours in an oxygen atmosphere.

### (3) Interfacial Protective Coating Layer Formation Step

A first coating layer coated on all or part of the surface of the second lithium metal oxide was prepared as follows: after dissolving the second lithium metal oxide in dehydrated ethanol, zirconium(IV) tetrapropoxide (70 wt.% in 1-propanol) was added in an amount such that the molar ratio of second lithium metal oxide:zirconium ions became 2:1, and stirring was performed, thereby preparing a coating solution containing lithium ions and zirconium ions. At this time, the concentration of zirconium ions in the coating solution was 0.1 mol/L.

400 mL of the second coating solution was sprayed onto 1 kg of the formed second lithium metal oxide using a fluidized coating apparatus (MP-01, manufactured by POWREX) to perform a coating process. Operating conditions of the fluidized coating apparatus were as follows: intake gas (nitrogen), intake gas temperature (80°C), intake air flow rate (0.3 m³/h), rotation speed (400 rpm), and coating solution spray rate (10 mL/min), and spraying was performed for a total of 40 minutes. Thereafter, the lithium transition metal oxide onto which the second coating solution had been sprayed was charged into a saggar and then heat-treated at 300°C while supplying oxygen into a box-type electric furnace, thereby manufacturing a positive electrode active material in which a Li₂ZrO₃ amorphous coating layer was formed as an interfacial protective coating layer on the surface of the lithium transition metal oxide.

### <Comparative Example 1> (2) CoSO₄ Washing Coating Not Performed

A positive electrode active material was manufactured under the same conditions as in Example 1, except that the first lithium transition metal oxide Ni₀.₈₃Co₀.₁₂Mn₀.₀₅O₂ synthesized in the primary calcination step was not washing-coated with CoSO₄, and the interfacial protective coating layer formation step was performed.

### <Comparative Example 2> (2) CoSO₄ Washing Coating and (3) Heat Treatment Not Performed

A positive electrode active material was manufactured under the same conditions as in Example 1, except that, without the CoSO₄ washing coating, LiOH addition, and heat treatment steps, the first lithium transition metal oxide Ni₀.₈₃Co₀.₁₂Mn₀.₀₅O₂ synthesized in the primary calcination step was washed with pure water, and then the interfacial protective coating layer formation step was immediately performed.

### <Comparative Example 3> (3) LiOH Excluded in Heat Treatment Step

A positive electrode active material was manufactured under the same conditions as in Example 1, except that, in the heat treatment step, the interfacial protective coating layer formation step was performed after heat treatment at 650°C for 5 hours in an oxygen atmosphere without addition of LiOH.

### Experimental Example 1 - Evaluation of Electrochemical Characteristics

### (1) Manufacture of All-Solid-State Battery for Evaluation

70 wt% of the manufactured positive electrode active material, 29 wt% of an argyrodite solid electrolyte, and 1 wt% of C65 as a conductive material were well mixed to prepare a mixed powder. A quantitative amount of argyrodite solid electrolyte serving as a separator was first charged into a jig for evaluating an all-solid-state battery, pressed at 300 MPa or more to have a thickness of about 100 µm, and then 10 mg of the positive electrode active material mixed powder was inserted on one surface thereof and secondarily pressed to manufacture a positive electrode part. Thereafter, a Li-In alloy was inserted on the other surface, and an appropriate pressure was applied, thereby manufacturing a battery for evaluating an all-solid-state battery.

### (2) Evaluation of Charge/Discharge Characteristics of All-Solid-State Battery for Evaluation

The manufactured all-solid-state battery cell for evaluation was mounted on a charge/discharge machine, and charge/discharge characteristics were evaluated at 30°C. Charging was performed by a constant-current/voltage method, and discharging was performed by a constant-current method. The charge end voltage was set to 3.63 V, and the discharge cut-off voltage was set to 1.9 V.

Constant-current/constant-voltage charging was performed, and the cut-off current density in the constant-voltage mode was set to a current of 0.02C. The rest time between charging and discharging was set to 20 minutes.

As summarized in Table 1 below, in Comparative Example 2, charge/discharge capacity and efficiency were greatly reduced due to washing damage, and Comparative Example 2 exhibited lower charge/discharge capacity and Coulombic efficiency than Comparative Example 1, which was not subjected to washing treatment. In Comparative Example 2, through the heat treatment process, an improvement phenomenon was observed in which lithium hydroxide and lithium carbonate, which remained on the surface of the positive electrode material in the form of residual lithium after being eluted during the washing process, restored the surface of the core during heat treatment. However, Comparative Example 2 exhibited slightly lower charge/discharge capacity and Coulombic efficiency than Comparative Example 1, which was not subjected to washing treatment.

In Comparative Example 3, since LiOH was not introduced during heat treatment, it was confirmed that the restoration phenomenon of the core surface was somewhat inferior to that of Example 1 in terms of initial charge capacity and initial discharge capacity. However, it was confirmed that Comparative Example 3 had superior capacity compared with Comparative Example 2, in which washing coating with a CoSO₄ solution and introduction of LiOH in the heat treatment step were not performed, and thus it was confirmed that electrochemical characteristics were improved when washing treatment was performed with a CoSO₄ solution.

In Example 1, a process of washing-coating with a CoSO₄ solution and then adding 3000 ppm of LiOH followed by heat treatment was introduced, thereby recovering washing damage and securing the highest charge/discharge capacity.

**[Table 1]**

| **Classification** | **0.1C Initial Charge Capacity (mAh/g)** | **0.1C Initial Discharge Capacity (mAh/g)** | **0.1C Initial Coulombic Efficiency (%)** |
|---|---|---|---|
| **Example 1** | 221.8 | 213.4 | 96.2 |
| **Comparative Example 1** | 217.7 | 207.7 | 95.4 |
| **Comparative Example 2** | 210.2 | 191.9 | 91.3 |
| **Comparative Example 3** | 215.3 | 202.8 | 94.2 |

## Claims

1. A positive electrode active material for an all-solid-state battery, comprising:
a core including an NCM-based lithium transition metal oxide; and
a coating layer containing a cobalt material and positioned on a surface of the core,
wherein a content of Ni in the NCM-based lithium transition metal oxide is 80 mol% or more based on 100 mol% of a total amount of transition metals, and
wherein cobalt contained in the coating layer includes at least one selected from metal cobalt and cobalt compounds.

2. The positive electrode active material for an all-solid-state battery of claim 1,
wherein a content of the cobalt material in the coating layer is in a range of 0.5 mol% to 2 mol% with respect to a total number of moles of transition metals constituting the core including the NCM-based lithium transition metal oxide.

3. The positive electrode active material for an all-solid-state battery of claim 1,
wherein a weight ratio of the coating layer to a total weight of the core is in a range of 1:100 to 20:100.

4. A method for manufacturing a positive electrode active material for an all-solid-state battery, comprising:
forming a transition metal hydroxide by mixing a nickel salt, a cobalt salt, a manganese salt, and a complexing agent by a coprecipitation method;
mixing the transition metal hydroxide and a lithium compound to form a lithium transition metal hydroxide;
first heat-treating the lithium transition metal hydroxide to form a lithium transition metal oxide;
washing the lithium transition metal oxide with a washing solution including CoSO₄;
second heat-treating the washed lithium transition metal oxide; and
coating the second heat-treated lithium transition metal oxide with a protective coating layer that suppresses an interfacial reaction with a solid electrolyte.

5. The method for manufacturing a positive electrode active material for an all-solid-state battery of claim 4,
wherein, in the washing step, a solvent included in the washing solution is at least one selected from water, methanol, and ethanol.

6. The method for manufacturing a positive electrode active material for an all-solid-state battery of claim 4,
wherein, in the washing step, a content of CoSO₄ in the washing solution is 1 to 30 wt% based on a total weight of the washing solution.

7. The method for manufacturing a positive electrode active material for an all-solid-state battery of claim 4,
wherein, in the washing step, a weight ratio of the lithium transition metal oxide to the washing solution is in a range of 100:100 to 80:100.

8. The method for manufacturing a positive electrode active material for an all-solid-state battery of claim 4,
wherein, in the washing step, a time for washing the lithium transition metal oxide is 5 minutes or more and less than 11 minutes.

9. The method for manufacturing a positive electrode active material for an all-solid-state battery of claim 4,
wherein the washing step further includes a stirring process, and
wherein a stirring speed is 100 rpm to 300 rpm.
